# EUROPÄISCHE PATENTSCHRIFT

(11) **EP 2 904 355 B1**
(45) Veröffentlichungstag und Bekanntmachung des Hinweises auf die Patenterteilung: **23.06.2021**
(21) Anmeldenummer: 13776716.6
(22) Anmeldetag: 01.10.2013
(51) Int. Cl.: G01D 5/26, G01B 9/02, G01N 27/00, G01L 9/00, G01N 21/45

(54) **OPTISCHE SENSORANORDNUNG SOWIE VERFAHREN ZUR ERFASSUNG EINER MESSGRÖSSE MIT HILFE EINER OPTISCHEN SENSORANORDNUNG**
OPTICAL SENSOR ARRANGEMENT AND METHOD FOR DETECTING A MEASURED VARIABLE WITH THE AID OF AN OPTICAL SENSOR ARRANGEMENT
DISPOSITIF DE DÉTECTION OPTIQUE ET PROCÉDÉ PERMETTANT DE DÉTECTER UNE VALEUR DE MESURE AU MOYEN D'UN DISPOSITIF DE DÉTECTION OPTIQUE

(30) Priorität: 04.10.2012 DE 102012019407
(43) Veröffentlichungstag der Anmeldung: 12.08.2015
(73) Patentinhaber: LEONI Kabel GmbH, 91154 Roth (DE)
(72) Erfinder: ROß, Ludwig, 76297 Stutensee (DE); FOß, Wolfgang, 76709 Kronau (DE); RADEV, Angel, 67200 Strasbourg (DE); ROß, Benjamin, 76448 Durmersheim (DE); KUFNER, Stefan, 96242 Sonnefeld (DE)
(74) Vertreter: FDST Patentanwälte
(86) Internationale Anmeldenummer: PCT/EP2013/002940
(87) Internationale Veröffentlichungsnummer: WO 2014/053234

(56) Entgegenhaltungen:
- WO-A1-88/05529
- WO-A1-88/09917
- WO-A2-2010/010527
- WO-A2-2011/038423
- SHIUH-CHUAN HER ET AL: "Dynamic Strain Measured by Mach-Zehnder Interferometric Optical Fiber Sensors", SENSORS, Bd. 12, Nr. 12, 8. März 2012 (2012-03-08), Seiten 3314-3326, XP055100511, ISSN: 1424-8220, DOI: 10.3390/s120303314 in der Anmeldung erwähnt

## Beschreibung

Die Erfindung betrifft eine optische Sensoranordnung mit den Merkmalen des Oberbegriffs des Anspruchs 1 sowie ein Verfahren zur Erfassung einer Messgröße mit einer derartigen optischen Sensoranordnung.

Die optische Sensoranordnung weist ein sogenanntes integriertes optisches Sensorelement auf, auch als optischer Chip bezeichnet. Dieser umfasst einen sich in Längsrichtung erstreckenden Träger, in dem eine Wellenleiterstruktur eingebracht ist. Der Träger besteht aus einem üblicherweise transparenten Substrat, beispielsweise Glas oder auch ein geeigneter Kunststoff. Die Wellenleiterstruktur kann auf verschiedene Wege eingebracht sein. Vorzugsweise werden die Wellenleiterstrukturen durch einen Ionenaustauschprozess ausgebildet, alternativ können auch Abscheidetechniken, wie beispielsweise CVD (chemical vapour deposition) zur Erzeugung der optischen Leiterbahnen herangezogen werden.

Auf dem optischen Chip, also auf dem Träger sind zur Ausbildung eines Interferometers zwei Wellenleiterarme, nämlich ein Referenzleiter sowie ein Messleiter ausgebildet, die auf dem Träger in Längsrichtung parallel nebeneinander innerhalb einer Leiterebene verlaufen.

Eine derartige Sensoranordnung ist beispielsweise aus der EP 1 469 292 A1 zu entnehmen. Die darin beschriebene Sensoranordnung dient zur Temperaturmessung. Der Messleiter und der Referenzleiter bestehen aus verschiedenen Materialien mit unterschiedlichen thermischen Ausdehnungskoeffizienten oder weisen eine unterschiedliche Länge auf. Dies führt bei einer Temperaturveränderung zu einer für die beiden Wellenleiterabschnitte unterschiedlichen Längendehnung, die aufgrund des interferometrischen Messprinzips erfasst und einer definierten Temperaturänderung zugeordnet wird. Ergänzend ist aus diesem Dokument auch der Einsatz als optischer Schalter bzw. Filter zu entnehmen. Hierzu ist ein elektrisch betätigbares Heizelement angeordnet, welches zu einer definierten Temperaturveränderung führt, so dass eine bewusste Längenänderung eingestellt wird und damit eine über das Interferometer detektierbare Phasenverschiebung erfolgt, die als Schalten gewertet wird.

Die Verwendung des Interferometerprinzips zur Manipulation eines optischen Signals ist allgemein bekannt und wird beispielsweise auch in der EP 1 041 424 A2 beschrieben. Auch hier wird einer der beiden Wellenleiterarme des Interferometers mit einem Heizelement versehen, so dass eine gewünschte Phasenverschiebung eingestellt werden kann. Das Dokument WO88/09917 A1 offenbart eine Sensoranordnung gemäß dem Stand der Technik.

Ausgehend hiervon liegt der Erfindung die Aufgabe zugrunde, das Einsatzgebiet eines optischen Sensors basierend auf einem integrierten optischen Chip zu erweitern.

Die Aufgabe wird gemäß der Erfindung gelöst durch eine optische Sensoranordnung mit den Merkmalen des Anspruchs 1 sowie durch ein Verfahren mit den Merkmalen des Anspruchs 15. Die im Hinblick auf die optische Sensoranordnung angeführten Vorteile und bevorzugten Ausgestaltungen sind sinngemäß auch auf das Verfahren zu übertragen.

Die optische Sensoranordnung weist ein optisches Sensorelement mit einem sich in einer Längsrichtung erstreckenden Träger auf, in den eine Wellenleiterstruktur eingebracht ist. Bei diesem optischen Sensorelement, insbesondere bei dem Träger mit der eingebrachten Wellenleiterstruktur handelt es sich also um einen sogenannten optischen Chip, bei dem durch Bearbeitung des Trägersubstrats integrierte Wellenleiterstrukturen ausgebildet werden. Die Bearbeitung zur Ausbildung der Wellenleiterstrukturen erfolgt in an sich bekannter Weise durch lonenaustauschprozesse oder auch durch Abscheidetechniken wie CVD. Der optische Chip ist daher üblicherweise ein monolithisches Bauteil, an dem üblicherweise optische Fasern anschließbar sind. Der optische Chip selbst, also der Träger mit den integrierten Wellenleiterstrukturen, weist keine optischen Fasern auf.

Dieser optische Chip ist nunmehr als Sensorelement ausgebildet und umfasst einen Referenzleiter sowie einen Messleiter, die gemeinsam auf dem Träger in Längsrichtung parallel nebeneinander innerhalb einer gemeinsamen Ebene, der sogenannten Leiterebene verlaufen.

Neben der Leiterebene ist nunmehr am optischen Chip eine sich quer zur Leiterebene erstreckende messaktive Seitenfläche ausgebildet, wobei der Messleiter benachbart zu dieser Seitenfläche an der Oberseite des Trägers, also innerhalb der Leiterebene angeordnet ist. Über diese messaktive Seitenfläche, die also insbesondere durch eine Querfläche des Trägers und damit des optischen Chips gebildet ist, wirkt die zu erfassende Messgröße ein.

Durch die nur einseitige Einwirkung lediglich auf die messaktive Seitenfläche bzw. die lediglich einseitige Wechselwirkung mit der messaktiven Seitenfläche erfolgt eine asymmetrische Wechselwirkung der Messgröße mit dem Sensorelement und zwar derart, dass durch diese Wechselwirkung eine asymmetrische Änderung der optischen Weglänge des Messleiters im Vergleich zum Referenzleiter erfolgt.

Diese optische Weglängenänderung wird mit dem zugrunde liegenden interferometrischen Messprinzip erfasst und aus der Größe der optischen Weglängenänderung, also der erfassten Phasenverschiebung zwischen den in den beiden Leiterarmen sich ausbreitenden Lichtwellen, wird auf die Messgröße und ihren Wert, zumindest auf die Veränderung des Wertes rückgeschlossen. Die beiden Signalanteile der Wellenarme werden dabei üblicherweise zusammengeführt und bilden ein Interferenzsignal, das ausgewertet wird. Die Messgröße ist dabei vorzugsweise eine Kraft, die zu einer einseitigen Deformation / Verbiegung des Trägers führt und/oder ein Stoff, der mit dem Sensorelement wechselwirkt und dadurch eine Veränderung der optischen Weglänge im Messleiter im Vergleich zum Referenzleiter hervorruft. Die beiden Wellenleiterarme sind dabei bevorzugt identisch zueinander ausgebildet, d.h. sie bestehen aus dem gleichen Material und sind zudem insbesondere auch symmetrisch zu einer Mittenachse ausgebildet.

Die Sensoranordnung umfasst daher in bevorzugter Ausbildung eine Auswerteeinheit, die zur Auswertung eines solchen Interferenzsignals ausgebildet ist und hieraus insbesondere auch auf die Größe der von außen nur einseitig auf das Sensorelement einwirkenden Messgröße rückschließt. Hierzu wird die Intensität des Lichtsignals erfasst und ausgewertet.

Die Ausnutzung des interferometrischen Prinzips zur Erfassung von Längenänderungen ist an sich bekannt, beispielsweise aus dem Aufsatz von Shiuh-Chuan Her et al. "Dynamic strain measured by Mach-Zehnder interferometric optical fiber sensors", Sensors 2012, Seiten 3314 bis 3326. Darin werden eine Sensor-Faser sowie eine Referenzfaser als Bestandteil des Interferometers vorgeschlagen. Ein optisches Signal wird über einen Koppler auf die beiden Fasern aufgeteilt und anschließend wieder über einen weiteren Koppler zusammengeführt und ausgewertet. Zur Erfassung beispielsweise von Schwingungen wird die Sensorfaser auf ein hinsichtlich der Schwingung zu überprüfendes Bauteil aufgebracht, so dass die Sensorfaser den Schwingungen ausgesetzt ist, was zu Längenänderungen der Sensorfaser führt. Hierdurch entstehen Phasenverschiebungen in Relation zu dem durch die Referenzfaser propagierenden Lichts.

Im Unterschied hierzu wird bei dem erfindungsgemäßen optischen Sensorelement die unmittelbare Wechselwirkung der zu messenden Messgröße mit dem optischen Chip, also dem integrierten optischen Element ausgewertet. Hierdurch ist eine deutlich kompaktere Ausgestaltung und auch eine vereinfachte Anwendung ermöglicht. Bei der gesamten Sensoranordnung handelt es sich daher im Wesentlichen um eine miniaturisierte, monolithische Interferometeranordnung. Die gesamte Interferometeranordnung ist daher im durch den optischen Chip gebildeten Sensorelement integriert. Durch die nur einseitige Wechselwirkung mit der einen, als messaktive Seitenfläche bezeichneten Seitenfläche wird zudem eine sehr hohe Sensitivität erreicht. Von besonderem Vorteil ist hierbei die sehr selektive Erfassung der gewünschten Messgröße, d.h. der Sensor reagiert nur auf die gewünschte Messgröße. In diesem Zusammenhang ist auch die geringe Querempfindlichkeit hervorzuheben, also der Vorteil, dass die gewünschte Messgröße ohne Störeinfluß von weiteren Einflüssen erfasst wird.

Das Wellenleitermuster auf dem Träger kann grundsätzlich zur Ausbildung von verschiedenen Interferometerprinzipien unterschiedlich ausgebildet sein. Vorzugsweise ist die Wellenleiterstruktur zur Ausbildung eines Mach-Zehnder-Interferometers ausgebildet. Daneben besteht auch die Möglichkeit der Ausbildung eines Michelson-Interferometers.

Allgemein wird über einen Eingangskanal Licht eingekoppelt, welches auf die beiden Interferometerarme (Messleiter, Referenzleiter) aufgeteilt und anschließend wieder zusammengeführt wird. Dabei ergibt sich das Interferenzsignal, welches über einen Ausgangskanal ausgekoppelt und der Auswerteeinheit übermittelt wird. Der Ausgangskanal kann an der gleichen Stirnseite wie der Eingangskanal oder an der gegenüberliegenden Stirnseite angeordnet sein.

In bevorzugter Ausgestaltung ist im Träger insbesondere ausgangsseitig ein sogenannter 3x3-Koppler vorgesehen, so dass insgesamt drei Ausgänge für das Interferenzsignal zur Verfügung stehen, die jeweils über eine optische Faser mit der Auswerteeinheit verbunden sind. Bei einem derartigen Koppler werden die beiden Interferenzarme bis auf einen Koppelabstand an einen dritten Wellenleiter herangeführt, so dass das Licht aus den beiden Interferenzarmen in den dritten Wellenleiter eingekoppelt wird. Der Koppelabstand wird dabei insbesondere derart gewählt, dass die Lichtanteile in den drei Wellenleitern um 120°Phasenversetzt zueinander sind. Der Koppelabstand hängt insbesondere von dem verwendeten Material des Wellenleiters und des Trägers, also insbesondere vom Brechzahlunterschied, ab und liegt beispielsweise im Bereich von 6-10µm. Insgesamt lässt sich dadurch insbesondere eine Information über die Ausbreitungsrichtung des Lichts ableiten.

Schließlich ist zur Ausbildung eines Michelson -Interferometers in zweckdienlicher Ausgestaltung eine Stirnseite des Trägers verspiegelt, so dass das Licht wieder in die jeweiligen Referenz- bzw. Messleiter zurückgeworfen und damit die Strecke (Länge des Trägers) zweimal durchlaufen wird.

Das Licht wird vorzugsweise mit Hilfe zumindest einer optischen Faser in den optischen Chip, also in den Träger mit dem eingebrachten Wellenleitermuster ein- und vorzugsweise auch ausgekoppelt. Das Sensorelement steht üblicherweise über diese optische Faser mit der Steuer- und Auswerteinheit in Verbindung. Diese umfasst unter anderem eine Lichtquelle, vorzugsweise ein Laser, der ein kohärentes Licht abgibt, zur Erzeugung des eingespeisten Lichts. Weiterhin umfasst die Auswerteinheit zumindest einen Lichtsensor, beispielsweise eine Fotodiode zur Erfassung des wieder aus dem Sensorelement ausgekoppelten Lichtes (Interferenzsignal). Dieses Interferenzsignal wird anschließend in an sich bekannter Weise nach dem interferometrischen Prinzip ausgewertet.

Zur Ein- und Auskopplung über die Faser ist zweckdienlicherweise an der Stirnseite des Trägers jeweils ein Koppelelement angebracht, an dem einerseits die optische Faser angeschlossen ist und welches an seiner Ausgangsseite an das Wellenleitermuster des Substrats angekoppelt ist. Das Koppelelement selbst ist dabei wiederum vorzugsweise ein Träger, in dem zur Ankopplung der Fasern V-Nuten eingebracht sind, in die die Fasern eingelegt sind.

Die Aufteilung des Lichts auf den Messleiter sowie den Referenzleiter erfolgt vorzugsweise mittels eines Y-Teilers. Dieser ist vorzugsweise auf dem Träger als Bestandteil der Wellenleiterstruktur ausgebildet.

In bevorzugter Ausgestaltung weist das Sensorelement eine sehr lang gestreckte Ausdehnung auf und seine Länge ist vorzugsweise um mehr als das zwanzigfache größer als seine Breite. Aufgrund dieser sehr langgestreckten Bauweise führen bereits vergleichsweise geringe Wechselwirkungen mit der zu messenden Größe zu einer ausreichenden Beeinflussung der optischen Weglänge des Messleiters und damit zu einem auswertbaren Signal mittels des sensiblen Interferometers.

Weiterhin sind die beiden Wellenleiterarme des Interferometers, also der Referenzleiter sowie der Messleiter, auf dem Träger in Querrichtung möglichst weit voneinander beabstandet, um einen möglichst großen relativen Längenunterschied zu erhalten. Der Messleiter und der Referenzleiter sind daher vorzugsweise möglichst weit außen angeordnet und sind von den jeweiligen Seitenflächen des Sensorelements insbesondere maximal um 100 µm und vorzugsweise lediglich bis maximal 50 µm beanstandet. Der Abstand ist dabei insbesondere derart gewählt, dass die äußeren Seitenflächen des Sensorelements noch keine Wechselwirkung mit dem sogenannten Evaneszentfeld haben, welches sich beim Betrieb im Nahbereich zu den Wellenleitern üblicherweise in einem Bereich von etwa 10-20 µm ausbildet. Der Abstand ist also ausreichend groß gewählt, dass das Licht störungsfrei durch die Wellenleiter propagieren kann. Der Abstand hängt dabei von dem Radius eines Modenfelds des im Wellenleiter propagierenden Lichts ab. Der Radius ist wiederum insbesondere abhängig von dem Brechzahlunterschied zwischen Träger und Wellenleiter. Je höher der Brechzahlunterschied, desto kleiner ist der Radius. Der Radius ist dabei definiert als der Abstand zu einer Zentralachse, bei dem die Intensität des Lichts in radialer Richtung auf 1/e² abgefallen ist. Die Intensität weist in radialer Richtung senkrecht zur Ausbreitungsrichtung eine glockenförmige (Gauß-) Verteilung auf. Die Wellenleiter sind vorliegend allgemein als Monomode-Wellenleiter ausgebildet. Der Abstand beträgt allgemein vorzugsweise mehr als das 2-fache des Radius des Modenfeldes.

Gemäß einer ersten bevorzugten Ausgestaltung wirkt im Betrieb eine vorzugsweise mechanische Kraft auf die messaktive Seitenfläche, so dass eine mechanische Verbiegung des Trägers hervorgerufen wird, was zu einer asymmetrischen Längenänderung des Messleiters in Relation zum Referenzleiter führt. Bei diesem ersten bevorzugten Ausführungstyp ist daher grundsätzlich die Erfassung einer mechanischen Deformation oder Verbiegung des Trägers mit Hilfe der Auswerteeinheit vorgesehen. Aus dieser wird dann auf die diese Deformation verursachende Messgröße rückgeschlossen.

Hierzu ist die Sensoranordnung beispielsweise als Dehnungssensor ausgebildet und die Seitenfläche ist eine Montagefläche, mit der der Träger in seinem montierten Zustand einseitig an einem zu prüfenden Bauteil befestigt ist. Die Befestigung erfolgt über seine messaktive Seitenfläche. Zweckdienlicherweise ist für eine einfache Montage hierbei eine Montageeinheit vorgesehen, über die das Sensorelement am Bauteil befestigt ist. Diese Montageeinheit ist beispielsweise ein insbesondere rahmenförmiges Trägerelement, in dem das Sensorelement quasi eingebettet ist, wobei die messaktive Seitenfläche aus der Rahmenöffnung hervor tritt oder bündig abschließt und im montierten Zustand vollflächig auf dem Bauteil aufliegt. Der Montagerahmen weist dabei beispielsweise Befestigungselemente auf. Alternativ oder egänzend wird die messaktive Seitenfläche auf das Bauteil aufgeklebt.

Gemäß einer zweiten Ausgestaltung ist das Sensorelement als ein Schwingungssensor ausgebildet, wobei hierzu das Sensorelement im montierten Zustand nur mit einem Fixierende an einem zu prüfendem Bauteil befestigt ist, so dass das Sensorelement an einem Freiende schwingen kann. Die Montage erfolgt hierbei vorzugsweise wiederum mit Hilfe einer Montageeinheit, in der das Sensorelement gehalten ist.

Schließlich ist in einer weiteren Alternative ein Kraft- oder Drucksensor geschaffen, indem gegenüberliegende Stirnenden des Sensorelements fixiert sind und eine vorzugsweise mittige Krafteinwirkung auf die messaktive Seitenfläche zu der asymmetrischen Längendehnung führt.

Während bei diesen zuvor beschriebenen Varianten des ersten grundsätzlichen Ausführungstyps mechanische Größen wie beispielsweise Schwingungen, Biegungen oder auch mechanische Krafteinwirkungen zu einer unmittelbaren asymmetrischen Deformation führen, ist gemäß einem zweiten grundsätzlichen Ausführungstyp auf dem Träger eine Messschicht aufgebracht, über die die asymmetrische optische Weglängenänderung bei Wechselwirkung mit der zu erfassenden Messgröße mittelbar erfolgt.

Bei einer ersten Variante dieses zweiten Ausführungstyps führt die Wechselwirkung der Messgröße mit der Messschicht zu einer Deformation, insbesondere eine Längenänderung der Messschicht, die dann auf den Träger übertragen wird. Die Messschicht ist allgemein mechanisch fest und insbesondere auch stofflich mit dem Träger verbunden.

Hierzu ist das Sensorelement vorzugsweise als Magnetfeldsensor ausgebildet und die Messschicht ist eine magnetostriktive Schicht, die bei Vorhandensein eines äußeren, zu messenden Magnetfelds deformiert wird. Die zu messende Messgröße ist daher die magnetische Feldstärke.

In einer alternativen Ausgestaltung ist die Messschicht vorzugsweise eine Reaktionsschicht, die derart ausgebildet ist, dass sie mit einem die Messgröße bildenden Stoff insbesondere chemisch, biologisch oder auch physikalisch reagiert, wodurch eine Veränderung der optischen Weglänge des Messleiters im Vergleich zum Referenzleiter herbeigeführt wird. Das Sensorelement ist dabei als Stoffsensor zur Erfassung eines Stoffes (Gas, Molekül...) ausgebildet. Insgesamt bildet die optische Sensoranordnung einen miniaturisierten Stoff / Gassensor mit einem monolithischen optischen Chip. Der Sensor dient dabei bevorzugt sowohl zur qualitativen als auch quantitativen Erfassung der Messgröße. Die Messschicht ist dabei entsprechend sensibel ausgebildet, so dass sie selektiv auf die Anwesenheit der Messgröße reagiert, wobei gleichzeitig die Intensität des Signals von der Konzentration der Messgröße abhängt.

Hierbei sind wiederum unterschiedliche Varianten möglich. Gemäß einer ersten Variante führt diese Reaktion zu einer mechanischen Deformation der Reaktionsschicht. Bei dieser Ausgestaltung ist die Reaktionsschicht insbesondere eine Palladiumschicht und das Sensorelement ist als Gassensor zur Erfassung von Wasserstoff ausgebildet. Bei einem derartigen H2-Sensor wird der Effekt ausgenutzt, dass Palladium Wasserstoff absorbiert und dabei eine Längenänderung hervorgerufen wird. Grundsätzlich können auch andere Gase/Stoffe über die Ausgestaltung von geeigneten Reaktionsschichten gemessen werden.

Gemäß einem weiteren Messprinzip ist vorgesehen, dass bei Vorhandensein des zu erfassenden Stoffes, also beispielsweise bei Anwesenheit des zu detektierenden Gases, dieses mit der Reaktionsschicht derart wechselwirkt, dass die Ausbreitung des Lichts im Evaneszenzfeld beeinflusst wird, also insbesondere dahingehend, dass sich die Brechzahl der an den Messleiter angrenzenden Materialschicht temporär (bei Anwesenheit des zu erfassenden Stoffs) ändert, so dass hierdurch die optische Weglänge für das Licht verändert wird.

Um dies zu ermöglichen wird die Reaktionsschicht sehr nahe an den Messleiter herangeführt. Zweckdienlicherweise beträgt der Abstand zum Messleiter selbst lediglich maximal etwa 10 µm bis 20 µm. Der Abstand ist ausreichend nahe, um eine Wechselwirkung mit dem Evaneszenzfeld zu erreichen. Hierzu liegt der Abstand vorzugsweise im Bereich zwischen dem 1,3 und 4-fachen des Radius des Modenfeldes des sich im Wellenleiter ausbreitenden Lichts.

Als Reaktionsschichten sind unterschiedlichste Schichten möglich, die sensibel hinsichtlich eines Stoffes / Moleküls / Enzyms.... sind und dieses aus physikalischem / chemischen / biologischem Weg einbinden, so dass die optische Eigenschaft, insbesondere die Brechzahl der Reaktionsschicht sich verändert.

Zur Herstellung eines Sensorelements mit einer derartigen Reaktionsschicht wird zunächst durch Polieren oder Schleifen auf einer der Seitenflächen des Trägers Material abgetragen, bis die Seitenfläche den gewünschten Abstand zum Messleiter einnimmt. Während des Polierens wird vorzugsweise Licht in das Sensorelement ein- und wieder ausgekoppelt und die Lichtausbreitung wird überwacht. Es wird also beim Poliervorgang der Grad der Wechselwirkung des Polierens mit dem Substrat durch Messung des ausgehenden Interferometersignals überwacht.

In einer weiteren Variante ist schließlich vorgesehen, dass in der Reaktionsschicht ein chemischer oder biologisch aktiver Rezeptor enthalten ist, welcher mit einem zu messenden Molekül, insbesondere ein sogenanntes Ligandenmolekül wechselwirkt, wodurch wiederum eine Änderung der optischen Weglänge hervorgerufen wird.

Ausführungsbeispiele der Erfindung werden im Folgenden anhand der Figuren näher erläutert. Diese zeigen jeweils in schematischen Darstellungen:
- Fig. 1: eine optische Sensoranordnung mit einem optischen Sensorelement mit integriertem optischen Chip, welcher mit einer Steuer- und Auswerteeinheit verbunden ist,
- Fig. 2A - E: verschiedene Ausführungsvarianten von Wellenleiterstrukturen auf dem Träger,
- Fig. 3: eine ausschnittsweise Aufsicht auf einen Träger mit darin eingebrachten Messleiter sowie Referenzleiter, wobei auf der einen Seite des Trägers zur Ausbildung der messaktiven Seitenfläche eine Messschicht aufgebracht ist,
- Fig. 4: die Ausgestaltung des Sensorelements als Dehnungssensor mit der Befestigung auf einem Bauteil,
- Fig. 5: die Ausgestaltung des Sensorelements als Schwingungssensor mit der Befestigung auf einem Bauteil,
- Fig. 6: das Sensorelement als Druck- oder Kraftsensor, bei dem das Sensorelement an seinen gegenüberliegenden Stirnenden eingespannt ist.

In den Figuren sind gleichwirkende Teile mit den gleichen Bezugszeichen bezeichnet.

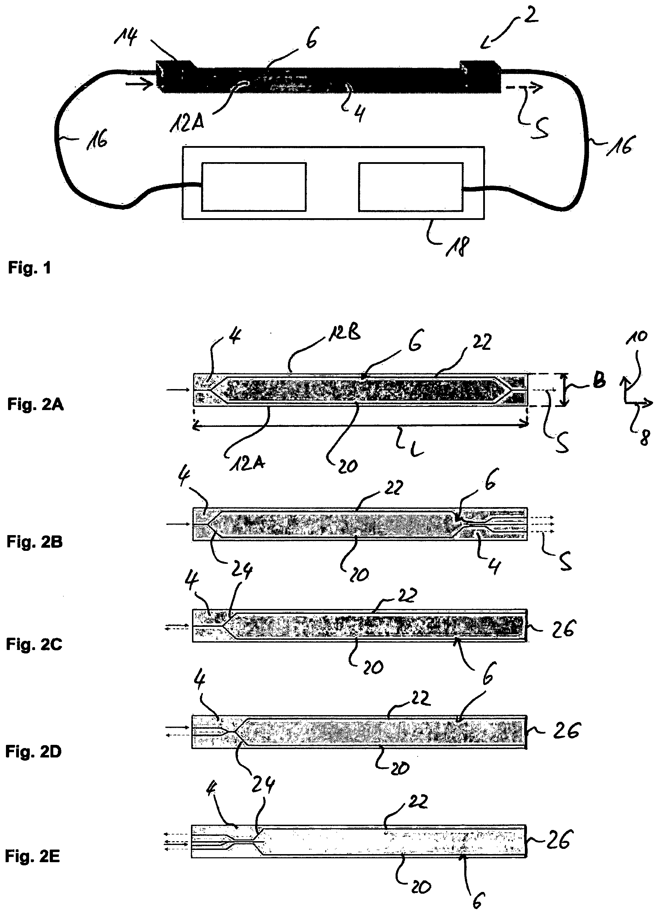

Die optische Sensoranordnung gemäß Fig. 1 umfasst ein Sensorelement 2, welches als optischer Chip einen Träger 4 mit darauf angebrachter Wellenleiterstruktur 6 umfasst. Der Träger 4 weist in Längsrichtung 8 eine Länge L und in einer Querrichtung 10 hierzu eine Breite B auf. Die Längsrichtung 8 sowie die Querrichtung 10 definieren eine Leiterebene, in der die Wellenleiterstruktur 6 ausgebildet ist. Die Höhe des Trägers 4 ist insbesondere kleiner oder gleich der Breite B.

Die Breite des Sensorelements 2 liegt allgemein etwa im Bereich von typischerweise 1 bis 5 mm. Die Länge beträgt mindestens das etwa 20fache dieser Breite B und liegt daher typischerweise etwa im Bereich von 20 bis 100 mm oder auch bis zu 150 mm.

Der Träger 4 ist im Ausführungsbeispiel quaderförmig ausgebildet, wobei er zwei gegenüberliegende Seitenflächen 12A, B aufweist. Die eine Seitenfläche 12A ist hierbei eine messaktive Seitenfläche, über die eine zu erfassende Messgröße auf das Sensorelement 2 seitlich und damit seitlich zur Wellenleiterstruktur 6 einwirkt.

An zumindest einer seiner Stirnseiten, im Ausführungsbeispiel der Fig. 1 an seinen beiden Stirnseiten, ist jeweils ein Koppelelement 14 angeordnet, über das jeweils eine optische Faser 16 mit der Wellenleiterstruktur 6 gekoppelt ist. Über die optischen Fasern 16 ist das Sensorelement 2 mit einer Steuer- und Auswerteeinheit 18 verbunden. Diese dient zum Einen zur Erzeugung des eingangsseitig in das Sensorelement 2 eingekoppelte Lichts sowie zur Auswertung des ausgangsseitig ausgekoppelten optischen Signals S (Interferenzsignal). Das eingekoppelte Licht wird jeweils in den Figuren durch einen durchgezogenen Pfeil und das ausgekoppelte Signal S durch einen gestrichelten Pfeil dargestellt.

Der Träger 4 ist vorzugsweise aus Glas oder alternativ aus einem optischen Kristall oder aus einem transparenten kristallinen Kunststoff. Die Wellenleiterstruktur 6 ist vorzugsweise durch lonenaustausch in die Glasoberfläche des Trägers 4 eingebracht. Alternativ ist die Wellenleiterstruktur 6 durch ein strukturiertes Beschichtungsverfahren, wie beispielsweise ein CVD-Verfahren aufgebracht. Schließlich ist alternativ vorgesehen, dass die Wellenleiterstruktur 6 quasi unterhalb der Oberfläche des Trägers angeordnet ist.

Grundsätzlich weist die Wellenleiterstruktur 6 auf dem Träger 4 zwei Interferometerarme auf, nämlich einen Messleiter 20 sowie einen Referenzleiter 22. Diese beiden Leiter 20, 22 bilden daher Teile der Wellenleiterstruktur 6. Weitere Wellenleiter oder integrierte Komponenten - außer die Teilbereiche zum Ein- und Auskoppeln des Lichts in den Messleiter 20 und den Referenzleiter 22 - sind nicht in den Träger 4 eingebracht. Das eingekoppelte Licht wird eingangsseitig über einen Y-Verteiler 24 auf diese beiden Wellenleiter 20, 22 aufgeteilt und anschließend werden die beiden Teilsignale dieser Wellenleiter 20, 22 wiederum zusammengeführt und als Interferenzsignal S der Auswerteeinheit 18 zugeführt.

Unterschiedliche Ausführungsvarianten der Wellenleiterstruktur 6 sind in den Fig. 2A - 2E dargestellt. Die Fig. 2A und 2B zeigen jeweils eine Wellenleiterstruktur zur Ausbildung eines Mach-Zehnder-Interferometers und die Wellenleiterstrukturen 6 gemäß den Fig. 2C - E dienen zur Ausbildung eines Michelson-Interferometers.

Die Messprinzipien dieser beiden Interferometer sind an sich bekannt. Bei der Umsetzung auf dem integrierten optischen Chip mit der Wellenleiterstruktur 6 unterscheiden sie sich dahingehend, dass gemäß den Ausführungsvarianten der Fig. 2A und 2B das Signal S gegenüberliegend zu dem eingekoppelten Licht ausgekoppelt wird und die beiden Wellenleiter 20, 22 durch zwei gegenüberliegende Y-Verteiler 24 miteinander verbunden sind. Beim Ausführungsbeispiel der Fig. 2B werden die Wellenleiter 20, 22 zu einem sogenannten 3x3-Koppler geführt, so dass das Ausgangssignal S über drei Ausgangskanäle, jeweils um 120° phasenversetzt ausgekoppelt wird. An jedem Ausgangskanal ist eine Lichtfaser 16 über das Kopplungselement 14 angeschlossen..

Im Unterschied hierzu liegt bei der Ausgestaltung als Michelson-Interferometer gemäß den Fig. 2C - 2E lediglich ein Y-Verteiler 24 auf der Eingangsseite vor und an der gegenüberliegenden Stirnseite ist eine Verspiegelung 26 ausgebildet, so dass das Licht wieder in den jeweiligen Leiter 20, 22 zurückgeworfen und an der Eingangsseite auch wieder ausgekoppelt wird. Bei dem Ausführungsbeispiel gemäß Fig. 2C wird das Licht sowie das Signal S über einen gemeinsamen Kanal ein- und ausgekoppelt. Bei der Ausgestaltung gemäß Fig. 2D sind dagegen für Eingang und Ausgang zwei verschiedene Kanäle vorgesehen. Schließlich ist bei der Ausführungsvariante gemäß Fig. 2E für das Signal S wiederum ein 3x3-Koppler ausgebildet.

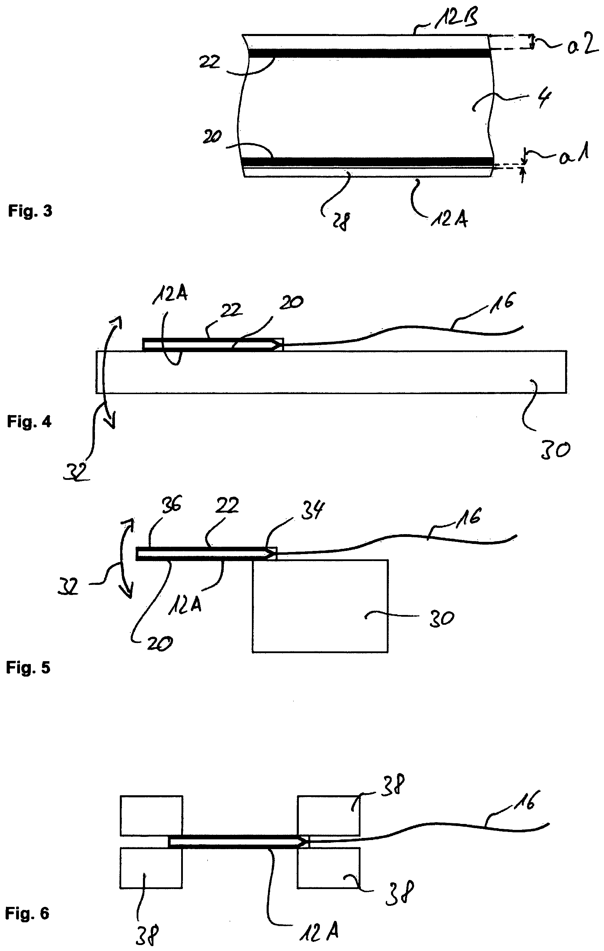

Die vergrößerte Darstellung gemäß Fig. 3 zeigt eine Ausführungsvariante, bei der die messaktive Seitenfläche 12A durch eine Messschicht 28 gebildet ist. Die Messschicht 28 ist vorzugsweise lediglich einige 100nm bis einige µm dick und ist sehr nahe an den Messleiter 20 herangeführt und von diesem vorzugsweise um einen Abstand a1 beabstandet, welcher lediglich im Bereich von beispielsweise 10 bis 20 µm liegt.

Der Referenzleiter 22 weist zur Seitenfläche 12B einen Abstand a2 auf, der maximal etwa 100 µm beträgt, zumindest jedoch 20 µm. Bei den Ausführungsvarianten ohne Messschicht 28 ist der Messleiter 20 von der seitlichen Begrenzungsfläche ebenfalls etwa um den gleichen Abstand a2 beabstandet. Diese seitliche Begrenzungsfläche bildet dann sogleich auch die messaktive Seitenfläche 12A.

Die Erfassung einer Messgröße mit Hilfe der optischen Sensoranordnung nutzt allgemein eine asymmetrische Änderung der optischen Weglänge einerseits im Messleiter 20 und andererseits im Referenzleiter 22 aus. In den Fig. 4 - 6 sind verschiedene Ausführungsvarianten dargestellt, bei denen eine mechanische Deformation des Sensorelements 20 erfolgt, nämlich eine Biegung des Trägers 4 um eine senkrecht zur Leiterebene stehenden Achse.

Beim Ausführungsbeispiel der Fig. 4 ist das Sensorelement 2 mit seiner messaktiven Seitenfläche 12A vollflächig auf ein Bauteil 30 beispielsweise durch Kleben oder mit Hilfe einer mechanischen Montageeinheit befestigt. Eine Biegung des Bauteils 30 in Richtung des Doppelpfeils 32 führt direkt auch zu einer Biegung des Sensorelements 2 und damit zu einer asymmetrischen Längenänderung zwischen den beiden Wellenleitern 20, 22.

Beim Ausführungsbeispiel der Fig. 5 ist das Sensorelement 2 als ein Schwingungssensor ausgebildet und lediglich mit einem Ende, hier seinem rückwärtigen Fixierende 34 am Bauteil 30 befestigt. Das vordere Freiende 36 kann frei schwingen, so dass bei einer Schwingung des Bauteils 30 das Freiende 36 ausgelenkt wird. Wiederrum lässt sich die dadurch hervorgerufene Verbiegung im Signal S aufgrund der asymmetrischen Längenänderung zwischen den Wellenleitern 20, 22 erfassen.

In Fig. 6 ist schließlich eine Ausgestaltung als Druck- oder Kraftsensor dargestellt, bei dem die gegenüberliegenden Enden des Sensorelements 2 durch Fixierelemente 38 fest eingespannt sind. Diese sind beispielsweise Teile eines Gehäuses eines Drucksensors. Wird nun das Sensorelement 2 mittig mit einer Kraft beaufschlagt, so erfolgt wiederum eine mechanische Deformation, welche über das interferometrische Messprinzip erfassbar ist.

Für die Ausgestaltung mit der Messschicht 28, wie sie in Fig. 3 dargestellt ist, bieten sich unterschiedliche Ausführungsvarianten an. Gemäß einer ersten Variante ist die Messschicht 28 eine Palladiumschicht und das Sensorelement 2 ist insgesamt als ein H2-Sensor ausgebildet. Der Effekt beruht hierbei darauf, dass der gasförmige Wasserstoff von der Palladiumschicht absorbiert wird und die Palladiumschicht sich hierbei ausdehnt, was wiederum zu einer asymmetrischen Längenänderung der Wellenleiter 20, 22 führt, die sich im Signal S niederschlägt.

Alternativ hierzu sind verschiedenste Messschichten 28 möglich. Erforderlich für die Umsetzung als Sensor ist lediglich, dass die Messschichten bei einer Wechselwirkung mit dem zu messenden Stoff (Flüssigkeit, Gase, Moleküle...) wechselwirken, derart, dass die optische Weglänge des Messleiters 20 beeinflusst wird. Dies kann durch eine temporäre mechanische Längung/Kürzung des Trägers 4 auf der messaktiven Seitenfläche 12A oder alternativ durch eine temporäre Veränderung der optischen Eigenschaften des Trägers 4, insbesondere des Brechungsindex hervorgerufen sein. Für letzteres ist entscheidend, dass die Messschicht 28 sehr nahe am Messleiter 20 angeordnet ist, um durch die Veränderung des Brechungsindex tatsächlich eine Wechselwirkung mit dem im Messleiter 20 propagierenden Lichts hervorrufen zu können.

Bei allen Ausführungsvarianten wird das ausgekoppelte Signal S (Interferenzsignal) von der Auswerteeinheit 18 ausgewertet, die auf die Messgröße, also entweder eine Kraft oder ein Stoff qualitativ und / oder quantitativ zurückschließt. Dabei wird zunächst aus der Phasenlage der beiden Signalanteile vom Messleiter 20 und vom Referenzleiter 22 die unterschiedliche optische Weglänge ermittelt. Aus der Veränderung der optischen Weglänge wird dann ermittelt ob und vorzugsweise auch mit welcher Stärke die Messgröße auf die messaktive Seitenfläche 12A einwirkt. Hierzu sind beispielsweise in der Auswerteeinheit Tabellen oder Funktionen hinterlegt, die die Zusammenhänge zwischen Längenänderung und Stärke der Messgröße, also entweder die Anwesenheit einer physikalischen Kraft oder eines Stoffes, wiedergeben. Entscheidend ist hierbei, dass die Auswerteeinheit 18 und die darin enthaltene Elektronik zur Auswertung des Signals S unter Berücksichtigung einer nur einseitigen Einwirkung auf das Sensorelement 2 ausgebildet ist.

### Bezugszeichenliste

- 2: Sensorelement
- 4: Träger
- 6: Wellenleiterstruktur
- 8: Längsrichtung
- 10: Querrichtung
- 12: messaktive Seitenfläche
- 12B: weitere Seitenfläche
- 14: Kopplungselement
- 16: optische Faser
- 18: Steuer- und Auswerteeinheit
- 20: Messleiter
- 22: Referenzleiter
- 24: Y-Verteiler
- 26: Verspiegelung
- 28: Messschicht
- 30: Bauteil
- 32: Doppelpfeil
- 34: Fixierende
- 36: Freiende
- 38: Fixierelement
- L: Länge
- B: Breite
- S: Signal
- a1, a2: Abstand

## Patentansprüche

1. Optische Sensoranordnung zur Erfassung einer Messgröße umfassend ein optisches Sensorelement (2) mit einem sich in einer Längsrichtung (8) erstreckenden Träger (4), in den eine integrierte Wellenleiterstruktur (6) eingebracht ist, wobei das optische Sensorelement (2) als ein optischer Chip ausgebildet ist, der keine optischen Fasern aufweist und bei dem die in den Träger (4) integrierte Wellenleiterstruktur (6) durch eine Bearbeitung eines Trägersubstrats des Trägers (4) ausgebildet ist, so dass die Wellenleiterstruktur (6) in oder unterhalb der Oberfläche des Trägers (4) eingebracht ist und wobei zur Ausbildung eines Interferometers ein eingehender Wellenleiter aufgeteilt ist in einen Referenzleiter (22) und einen Messleiter (20), die auf dem Träger (4) in Längsrichtung (8) parallel nebeneinander innerhalb einer Leiterebene verlaufen, **dadurch gekennzeichnet, dass** der Träger (4) benachbart zum Messleiter (20) eine sich quer zur Leiterebene erstreckende Seitenfläche (12A) aufweist, die beim Einsatz der Sensoranordnung zur Verwendung als eine messaktive Seitenfläche (12A) vorgesehen ist, auf die die zu erfassende Messgröße einwirkt, so dass eine asymmetrische Wechselwirkung der Messgröße mit der Wellenleiterstruktur (6) erfolgt und die optische Weglänge des Messleiters (20) in Relation zum Referenzleiter (22) variiert.

2. Optische Sensoranordnung nach Anspruch 1, **dadurch gekennzeichnet, dass** sie eine Auswerteeinheit (18) umfasst, die zur Auswertung eines Interferenzsignals (S) ausgebildet ist und hieraus auf eine von außen nur einseitig auf das Sensorelement (2) einwirkende Messgröße rückschließt, wobei die Messgröße eine Kraft ist, die zu einer Verbiegung des Trägers (4) führt, oder ein Stoff ist, der mit dem Material des Sensorelements (2) wechselwirkt und dadurch eine Veränderung der optischen Weglänge im Messleiter (20) im Vergleich zum Referenzleiter (22) hervorruft.

3. Optische Sensoranordnung nach Anspruch 1 oder 2,
**dadurch gekennzeichnet,**
**dass** die Wellenleiterstruktur (6) ausgangsseitig einen 3x3 Koppler für das Interferenzsignal (S) aufweist.

4. Optische Sensoranordnung nach einem der Ansprüche 1 bis 3,
**dadurch gekennzeichnet,**
**dass** die Leiterebene durch die Längsrichtung (8) und eine Querrichtung (10) aufgespannt ist und dass das Verhältnis der Länge (L) des Trägers (4) in Längsrichtung (8) zu seiner Breite (B) in Querrichtung (10) größer 20 ist.

5. Optische Sensoranordnung nach einem der Ansprüche 1 bis 4,
**dadurch gekennzeichnet,**
**dass** das Sensorelement (2) seitlich durch die messaktive Seitenfläche (12A) sowie einer zweiten dieser gegenüberliegenden Seitenfläche (12B) begrenzt ist und der Messleiter (20) sowie der Referenzleiter (22) von diesen Seitenflächen (12A, 12B) jeweils um maximal bis 100µm, vorzugsweise bis maximal 50µm beabstandet sind.

6. Optische Sensoranordnung nach einem der vorhergehenden Ansprüche,
**dadurch gekennzeichnet,**
**dass** eine Krafteinwirkung auf die messaktive Seitenfläche (12A) zu einer mechanischen Verbiegung des Trägers (4) und damit zu einer asymmetrischen Längendehnung des Messleiters (20) in Relation zum Referenzleiter (22) führt,

7. Optische Sensoranordnung nach Anspruch 6,
**dadurch gekennzeichnet,**
**dass** zur Ausbildung eines Dehnungssensors die Seitenfläche als eine Montagefläche ausgebildet ist, mit der der Träger (4) im montierten Zustand nur mit seiner messaktiven Seitenfläche (12A) einseitig an einem zu prüfenden Bauteil (30) befestigt ist.

8. Optische Sensoranordnung nach Anspruch 6,
**dadurch gekennzeichnet,**
**dass** zur Ausbildung eines Schwingungssensors das Sensorelement (2) im montierten Zustand nur mit einem Fixierende (34) an einem zu prüfenden Bauteil (30) befestigt ist, so dass das Sensorelement (2) an einem Freiende (36) schwingen kann.

9. Optische Sensoranordnung nach Anspruch 6,
**dadurch gekennzeichnet,**
**dass** zur Ausbildung eines Kraftsensors gegenüberliegende Stirnenden des Sensorelements (2) fixiert sind und eine Krafteinwirkung auf die messaktive Seitenfläche (12A) zur asymmetrischen Längendehnung des Messleiters (20) in Relation zum Referenzleiter (22) führt.

10. Optische Sensoranordnung nach einem der vorhergehenden Ansprüche,
**dadurch gekennzeichnet,**
**dass** zur Ausbildung der messaktiven Seitenfläche (12A) auf den Träger (4) eine Messschicht (28) aufgebracht wird, die bei Wechselwirkung mit einer zu erfassenden Größe zu einer asymmetrischen Beeinflussung des Messleiters (20) in Bezug auf den Referenzleiter (22) führt.

11. Optische Sensoranordnung nach Anspruch 10,
**dadurch gekennzeichnet,**
**dass** zur Ausbildung eines Magnetfeldsensors die Messschicht (28) eine magnetostriktive Schicht ist, die bei einem zu messenden äußeren Magnetfeld deformiert wird.

12. Optische Sensoranordnung nach Anspruch 10,
**dadurch gekennzeichnet,**
**dass** zur Ausbildung eines Stoffsensors als Messschicht (28) eine Reaktionsschicht aufgebracht ist, die bei Anwesenheit eines zu messenden Stoffes zu einer Veränderung der optischen Weglänge des Messleiters (20) führt.

13. Optische Sensoranordnung nach Anspruch 12,
**dadurch gekennzeichnet,**
**dass** die Reaktionsschicht eine Palladiumschicht ist und der Stoffsensor zur Erfassung von Wasserstoff ausgebildet ist.

14. Optische Sensoranordnung nach Anspruch 12,
**dadurch gekennzeichnet,**
**dass** die Reaktionsschicht einen Rezeptor aufweist, der auf ein Ligandenmolekül reagiert.

15. Optische Sensoranordnung nach einem der Ansprüche 10 bis 14,
**dadurch gekennzeichnet,**
**dass** die Messschicht (28) nahe am Messleiter (20) angebracht ist, derart, dass eine Wechselwirkung mit einem sich bei einer Lichtausbreitung im Messleiter (20) ausbildenden Evaneszenzfeld erfolgt.

16. Verfahren zur Erfassung einer Messgröße mit Hilfe einer optischen Sensoranordnung umfassend ein optisches Sensorelement (2) mit einem sich in einer Längsrichtung (8) erstreckenden Träger (4), in den eine integrierte Wellenleiterstruktur (6) eingebracht ist, wobei das optische Sensorelement (2) als ein optischer Chip ausgebildet ist, der keine optischen Fasern aufweist und bei dem die in den Träger (4) integrierte Wellenleiterstruktur (6) durch eine Bearbeitung eines Trägersubstrats des Trägers (4) ausgebildet ist, so dass die Wellenleiterstruktur (6) in oder unterhalb der Oberfläche des Trägers (4) eingebracht ist und wobei zur Ausbildung eines Interferometers ein eingehender Wellenleiter aufgeteilt ist in einen Referenzleiter (22) und einen Messleiter (20), die auf dem Träger (4) in Längsrichtung (8) parallel nebeneinander innerhalb einer Leiterebene verlaufen, , wobei der Messleiter (20) sowie der Referenzleiter (22) gemeinsam an einer Oberseite des Trägers (4) innerhalb der Leiterebene angeordnet sind,
**dadurch gekennzeichnet,**
**dass** eine quer zur Leiterebene erstreckende Seitenfläche (12A) als eine messaktive Seitenfläche (12A) verwendet wird, auf die die Messgröße einwirkt, so dass eine asymmetrische Wechselwirkung der Messgröße mit der Wellenleiterstruktur hervorgerufen wird und die optische Weglänge des Messleiters (20) in Relation zum Referenzleiter (22) variiert und die veränderte optische Weglänge mit Hilfe des Interferometers ausgewertet wird.

## Claims

1. Optical sensor arrangement for detecting a measured variable, comprising an optical sensor element (2) with a carrier (4) extending in a longitudinal direction (8), into which a waveguide structure (6) is introduced, wherein the optical sensor element (2) is designed as an optical chip, which comprises no optical fibers and in which the waveguide structure (6) integrated into the carrier (4) is formed by processing a carrier substrate of the carrier (4), so that the waveguide structure (6) is introduced into or below the surface of the carrier (4), and wherein, for forming an interferometer, an incoming waveguide is divided into a reference conductor (22) and a measuring conductor (20), which extend on the carrier (4) in the longitudinal direction (8) parallel next to one another within a conductor plane, wherein the measuring conductor (20) and the reference conductor (22) are arranged together on an upper side of the carrier (4) within the conductor plane
**characterized in**
**that** the carrier (4) comprises, adjacent to the measuring conductor (20), a side surface (12A), which extends transversely with respect to the conductor plane and which, when the sensor arrangement is used, is intended for use as a measuring-active side surface (12A), on which the measured variable to be detected acts, so that an asymmetrical interaction of the measured variable with the waveguide structure (6) takes place and the optical path length of the measuring conductor (20) varies in relation to the reference conductor (22).

2. Optical sensor arrangement according to claim 1,
**characterized in**
**that** it comprises an evaluation unit (18), which is designed to evaluate an interference signal (S) and therefrom draws conclusions about a measured variable, which acts on the sensor element (2) from the outside only on one side, wherein the measured variable is a force, which leads to a bending of the carrier (4), or is a substance, which interacts with the material of the sensor element (2) and thereby causes a change in the optical path length in the measuring conductor (20) in comparison with the reference conductor (22).

3. Optical sensor arrangement according to claim 1 or 2,
**characterized in**
**that** the waveguide structure (6) comprises a 3x3 coupler for the interference signal (S) on the output side.

4. Optical sensor arrangement according to one of claims 1 to 3,
**characterized in**
**that** the conductor plane is spanned by the longitudinal direction (8) and a transverse direction (10), and in that the ratio of the length (L) of the carrier (4) in the longitudinal direction (8) to its width (B) in the transverse direction (10) is greater than 20.

5. Optical sensor arrangement according to one of claims 1 to 4,
**characterized in**
**that** the sensor element (2) is bounded laterally by the measurement-active side surface (12A) and a second side surface (12B) opposite the latter, and the measurement conductor (20) and the reference conductor (22) are spaced apart from said side surfaces (12A, 12B) respectively by a maximum of up to 100 µm, preferably up to a maximum of 50 µm.

6. Optical sensor arrangement according to one of the preceding claims,
**characterized in**
**that** a force acting on the measurement-active side surface (12A) leads to a mechanical bending of the carrier (4) and thus to an asymmetrical elongation of the measurement conductor (20) in relation to the reference conductor (22).

7. Optical sensor arrangement according to claim 6,
**characterized in**
**that**, for forming a strain sensor, the side surface is designed as a mounting surface with which the carrier (4), in the mounted state, is fastened only with its measuring-active side surface (12A) on one side to a component (30) to be tested.

8. Optical sensor arrangement according to claim 6,
**characterized in**
**that**, for forming a vibration sensor, the sensor element (2), in the mounted state, is fastened only by a fixing end (34) to a component (30) to be tested, so that the sensor element (2) can swing at a free end (36).

9. Optical sensor arrangement according to claim 6,
**characterized in**
**that**, for forming a force sensor, opposite end faces of the sensor element (2) are fixed, and the force acting on the measurement-active side face (12A) leads to asymmetrical longitudinal elongation of the measurement conductor (20) in relation to the reference conductor (22).

10. Optical sensor arrangement according to one of the preceding claims,
**characterized in**
**that**, for forming the measurement-active side surface (12A), a measurement layer (28) is applied to the carrier (4), said measurement layer (28) - when interacting with a variable to be detected - leading to an asymmetrical influence of the measurement conductor (20) in relation to the reference conductor (22).

11. Optical sensor arrangement according to claim 10,
**characterized in**
**that**, for forming a magnetic field sensor, the measuring layer (28) is a magnetostrictive layer, which is deformed in the case of an external magnetic field to be measured.

12. Optical sensor arrangement according to claim 10,
**characterized in**
**that**, for forming a substance sensor, a reaction layer is applied as measuring layer (28), said reaction layer leading to a change in the optical path length of the measuring conductor (20) in the presence of a substance to be measured.

13. Optical sensor arrangement according to claim 12,
**characterized in**
**that** the reaction layer is a palladium layer and the substance sensor is designed to detect hydrogen.

14. Optical sensor arrangement according to claim 12,
**characterized in**
**that** the reaction layer comprises a receptor, which reacts to a ligand molecule.

15. Optical sensor arrangement according to one of claims 10 to 14,
**characterized in**
**that** the measuring layer (28) is disposed close to the measuring conductor (20) in such a way that an interaction with an evanescent field forming during a light propagation in the measuring conductor (20) takes place.

16. Method for detecting a measured variable by means of an optical sensor arrangement, said optical sensor arrangement comprising an optical sensor element (2) with a carrier (4) extending in a longitudinal direction (8), into which an integrated waveguide structure (6) is introduced, wherein the optical sensor element (2) is designed as an optical chip, which has no optical fibers and in which the waveguide structure (6) integrated into the carrier (4) is formed by processing a carrier substrate of the carrier (4), so that the waveguide structure (6) is introduced into or below the surface of the carrier (4), and wherein, for forming an interferometer, an incoming waveguide is divided into a reference conductor (22) and a measuring conductor (20), which extend on the carrier (4) in the longitudinal direction (8) parallel next to one another within a conductor plane, wherein the measuring conductor (20) and the reference conductor (22) are arranged together on an upper side of the carrier (4) within the conductor plane
**characterized in**
**that** a side surface (12A) extending transversely to the conductor plane is used as a measurement-active side surface (12A), on which the measurement variable acts, so that an asymmetrical interaction of the measurement variable with the waveguide structure is caused and the optical path length of the measurement guide (20) is varied in relation to the reference conductor (22) and the varied optical path length is evaluated by means of the interferometer.

## Revendications

1. Agencement de capteur optique pour la détection d'une grandeur de mesure, comprenant un élément de capteur optique (2) avec un support (4) s'étendant dans une direction longitudinale (8), dans lequel est introduite une structure de conducteur d'ondes (6), dans lequel l'élément de capteur optique (2) est conçu comme une puce optique, qui ne comprend pas de fibres optiques, et dans lequel la structure de conducteur d'ondes (6) intégrée dans le support (4) est formée par le traitement d'un substrat de support du support (4), de sorte que la structure de conducteur d'ondes (6) est introduite dans ou sous la surface du support (4), et dans lequel, pour former un interféromètre, un conducteur d'ondes entrant est divisé en un conducteur de référence (22) et un conducteur de mesure (20), qui s'étendent sur le support (4) dans la direction longitudinale (8) parallèlement l'un à côté de l'autre à l'intérieur d'un plan conducteur, dans lequel le conducteur de mesure (20) et le conducteur de référence (22) sont disposés ensemble sur un côté supérieur du support (4) à l'intérieur du plan conducteur
**caractérisé en ce**
**que** le support (4) comprend, à côté du conducteur de mesure (20), une surface latérale (12A) s'étendant transversalement par rapport au plan conducteur et qui, en cas d'utilisation de l'agencement de capteurs, est destinée à être utilisée comme surface latérale active de mesure (12A), sur laquelle agit la grandeur de mesure à détecter, de sorte qu'il se produit une interaction asymétrique de la grandeur de mesure avec la structure de conducteur d'ondes (6) et que la longueur du trajet optique du conducteur de mesure (20) varie par rapport au conducteur de référence (22).

2. Agencement de capteur optique selon la revendication 1,
**caractérisé en ce**
**qu'**il comprend une unité d'évaluation (18), qui est conçue pour évaluer un signal parasite (S) et en tire des conclusions sur une grandeur de mesure, qui agit sur l'élément capteur (2) de l'extérieur uniquement sur un côté, la grandeur de mesure étant une force, qui conduit à une flexion du support (4), ou une substance, qui interagit avec le matériau de l'élément capteur (2) et provoque ainsi une modification de la longueur du trajet optique dans le conducteur de mesure (20) par rapport au conducteur de référence (22).

3. Agencement de capteur optique selon la revendication 1 ou 2,
**caractérisé en ce**
**que** la structure de conducteur d'ondes (6) comporte un coupleur 3x3 pour le signal d'interférence (S) du côté de la sortie.

4. Agencement de capteur optique selon l'une des revendications 1 à 3,
**caractérisé en ce**
**que** le plan conducteur est défini par la direction longitudinale (8) et une direction transversale (10), et **en ce que** le rapport entre la longueur (L) du support (4) dans la direction longitudinale (8) et sa largeur (B) dans la direction transversale (10) est supérieur à 20.

5. Agencement de capteur optique selon l'une des revendications 1 à 4,
**caractérisé en ce**
**que** l'élément capteur (2) est limité latéralement par la surface latérale active de mesure (12A) et par une deuxième surface latérale (12B) opposée à la première, et **en ce que** le conducteur de mesure (20) et le conducteur de référence (22) sont respectivement espacés de ces surfaces latérales (12A, 12B) d'un maximum de 100 µm, de préférence d'un maximum de 50 µm.

6. Agencement de capteur optique selon l'une des revendications précédentes,
**caractérisé en ce**
**qu'**une application de force sur la surface latérale active de mesure (12A) conduit à une flexion mécanique du support (4) et donc à un allongement asymétrique du conducteur de mesure (20) par rapport au conducteur de référence (22).

7. Agencement de capteur optique selon la revendication 6,
**caractérisé en ce**
**que**, pour former un capteur de contrainte, la surface latérale est conçue comme une surface de montage avec laquelle le support (4), à l'état monté, est fixé d'un seul côté par sa surface latérale active de mesure (12A) à un composant (30) à contrôler.

8. Agencement de capteur optique selon la revendication 6,
**caractérisé en ce**
**que**, pour former un capteur de vibrations, l'élément capteur (2), à l'état monté, est fixé uniquement par une extrémité de fixation (34) à un composant (30) à contrôler, de sorte que l'élément capteur (2) peut osciller à une extrémité libre (36).

9. Agencement de capteur optique selon la revendication 6,
**caractérisé en ce**
**que**, pour former un capteur de force, des faces frontales opposées de l'élément capteur (2) sont fixées, et l'application de force sur la face latérale active de mesure (12A) conduit à un allongement longitudinal asymétrique du conducteur de mesure (20) par rapport au conducteur de référence (22).

10. Agencement de capteur optique selon l'une des revendications précédentes,
**caractérisé en ce**
**que**, pour former la surface latérale active de mesure (12A), une couche de mesure (28) est appliquée sur le support (4), ladite couche de mesure (28), lors de l'interaction avec une grandeur à détecter, conduisant à une influence asymétrique du conducteur de mesure (20) par rapport au conducteur de référence (22).

11. Agencement de capteur optique selon la revendication 10,
**caractérisé en ce**
**que**, pour former un capteur de champ magnétique, la couche de mesure (28) est une couche magnétostrictive, qui se déforme dans le cas d'un champ magnétique externe à mesurer.

12. Agencement de capteur optique selon la revendication 10,
**caractérisé en ce**
**que**, pour former un capteur de substance, une couche de réaction est appliquée en tant que couche de mesure (28), ladite couche de réaction conduisant à une modification de la longueur du trajet optique du conducteur de mesure (20) en présence d'une substance à mesurer.

13. Agencement de capteur optique selon la revendication 12,
**caractérisé en ce**
**que** la couche de réaction est une couche de palladium et que le capteur de substance est conçu pour détecter l'hydrogène.

14. Agencement de capteur optique selon la revendication 12,
**caractérisé en ce**
**que** la couche de réaction comporte un récepteur, qui réagit à une molécule de ligand.

15. Agencement de capteur optique selon l'une des revendications 10 à 14,
**caractérisé en ce**
**que** la couche de détection (28) est disposée à proximité du conducteur de mesure (20), de sorte qu'une interaction avec un champ évanescent se formant pendant une propagation de lumière dans le conducteur de mesure (20) a lieu.

16. Procédé pour la détection d'une grandeur de mesure à l'aide d'un agencement de capteur optique, qui comprend un élément de capteur optique (2) avec un support (4) s'étendant dans une direction longitudinale (8), dans lequel est introduite une structure de conducteur d'ondes intégrée (6), dans lequel l'élément de capteur optique (2) est conçu comme une puce optique, qui ne comprend pas de fibres optiques, et dans lequel la structure de conducteur d'ondes (6) intégrée dans le support (4) est formée par traitement d'un substrat de support du support (4), de sorte que la structure de conducteur d'ondes (6) est introduite dans ou sous la surface du support (4), et dans lequel, pour de former un interféromètre, un conducteur d'ondes entrant est divisé en un conducteur de référence (22) et un conducteur de mesure (20), qui s'étendent sur le support (4) dans la direction longitudinale (8) parallèlement l'un à côté de l'autre à l'intérieur d'un plan conducteur, dans lequel le conducteur de mesure (20) et le conducteur de référence (22) sont disposés ensemble sur un côté supérieur du support (4) à l'intérieur du plan conducteur,
**caractérisé en ce**
**qu'**une surface latérale (12A) s'étendant transversalement au plan conducteur est utilisée en tant que surface latérale active de mesure (12A), sur laquelle agit la grandeur de mesure, de sorte qu'une interaction asymétrique de la grandeur de mesure avec la structure de conducteur d'ondes est provoquée et que la longueur de trajet optique du conducteur de mesure (20) est modifiée par rapport au conducteur de référence (22) et la longueur de trajet optique modifiée est évaluée à l'aide de l'interféromètre.
